# EUROPÄISCHE PATENTSCHRIFT

(11) **EP 3 057 823 B1**
(45) Veröffentlichungstag und Bekanntmachung des Hinweises auf die Patenterteilung: **25.04.2018**
(21) Anmeldenummer: 14781209.3
(22) Anmeldetag: 07.10.2014
(51) Int. Cl.: B60N 2/12, B60N 2/235, F16H 25/18

(54) **FAHRZEUGSITZ MIT EINEM INTEGRIERTEN EASY-ENTRY-SYSTEM**
VEHICLE SEAT WITH AN INTEGRATED EASY-ENTRY SYSTEM
SIÈGE DE VÉHICULE DANS LEQUEL EST INTÉGRÉ UN SYSTÈME D'ACCÈS FACILE

(30) Priorität: 16.10.2013 DE 102013220958; 12.12.2013 DE 102013225698
(43) Veröffentlichungstag der Anmeldung: 24.08.2016
(73) Patentinhaber: Adient Luxembourg Holding S.à r.l., 1855 Luxembourg (LU)
(72) Erfinder: PLUTA, Wolfgang, 67699 Heiligenmoschel (DE); WOLF, Christian, 67806 Katzenbach (DE); DILL, Thomas, 67699 Heiligenmoschel (DE); HAMMANN, Heinrich, 67806 Teschenmoschel (DE)
(74) Vertreter: Finger, Catrin
(86) Internationale Anmeldenummer: PCT/EP2014/071445
(87) Internationale Veröffentlichungsnummer: WO 2015/055467

(56) Entgegenhaltungen:
- EP-A2- 1 291 236
- WO-A1-99/38723
- US-A1- 2006 250 013

## Beschreibung

Die Erfindung betrifft einen Fahrzeugsitz mit einem Easy-Entry-System. Im Stand der Technik sind verschiedene Easy-Entry-Systeme bekannt, welche einen erleichterten Einstieg in eine zweite Sitzreihe eines Fahrzeuges ermöglichen. Das Easy-Entry-System ist durch einen Entriegelungshebel, welcher üblicherweise an einer Sitzlehne des Fahrzeugsitzes angeordnet ist, betätigbar, wodurch die Sitzlehne des Fahrzeugsitzes aus einem Einstiegsbereich schwenkt. Ist der Fahrzeugsitz auf Schienen angeordnet, kann der Fahrzeugsitz bei Betätigung des Entriegelungshebels zusätzlich oder alternativ in Fahrtrichtung aus dem Einstiegsbereich heraus verschiebbar sein.

Die DE 10 2005 003 817 A1 beschreibt einen Kraftfahrzeugsitz mit einem Sitzteil und einer vermittels eines Entriegelungsmechanismus in einem Neigungs-Rastverstellmechanismus verriegelbaren Rückenlehne, die um eine sitzteilfeste Schwenkachse über einen Easy-Entry-Bedienungshebels in eine Easy-Entry-Position und über einen sitzteilfesten Komfort-/Cargo-Bedienungshebels in eine Komfort- oder Cargo-Position schwenkbar ist, und mit einem durch den Easy-Entry-Bedienungshebel und den Komfort-/Cargo-Bedienungshebel betätigbaren, um die sitzteilfeste Schwenkachse schwenkbar gelagerten Entriegelungshebel, welcher über eine koaxial zur Schwenkachse verlaufende Entriegelungswelle mit einem verstellbaren Verriegelungselement des Neigungs-Rastverstellmechanismus in Wirkverbindung steht, das mit einem sitzteilfesten Verriegelungselement des Neigungs-Rastverstellmechanismus verrastbar ist, wobei der Entriegelungshebel in Wirkverbindung steht mit einem über den Easy-Entry-Bedienungshebel betätigbaren, in Verriegelungsstellung des Neigungs-Rastverstellmechanismus vorgespannten Schwenkbügel, der um eine lehnenfeste Schwenkbügelachse drehbar gelagert ist.

Aus der DE 10 2006 015 138 A1 ist ein Kraftfahrzeugsitz mit einem Sitzteil und einer in der Neigung verstellbaren Rückenlehne bekannt, die um eine sitzteilfeste Schwenkachse aus einer Gebrauchsposition in eine nach vorn geneigte oder eine vorgeklappte Position schwenkbar ist und vermittels eines auf der Schwenkachse angeordneten Rastverstellbeschlags mit dem Sitzteil verriegelbar und entriegelbar verbunden ist, wobei der Rastverstellbeschlag über einen mit diesem gekoppelten Bowdenzug ver- und entriegelbar ist, der durch einen Bowdenzughebel betätigbar ist, wobei der Bowdenzughebel des Bowdenzugs oberhalb der Rückenlehnen-Schwenkachse am Rückenlehnenrahmen angeordnet ist und dass die Bowdenzugseele um eine erste, auf der Schwenkachse fliegend gelagerte Umlenkrolle und um eine zweite innerhalb des Rückenlehnenrahmens angeordnete sitzteilfeste Umlenkrolle geführt ist und mit ihrem dem Bowdenzughebel abgewandten Ende am freien Ende eines Rastverstellbeschlag-Entriegelungshebels befestigt ist, dessen anderes Ende drehfest mit der Schwenkachse verbunden ist.

Die WO 99/38723 A1 beschreibt eine Schwenkvorrichtung für einen Fahrzeugsitz mit einer Rückenlehne. Ein Nockenstift ist auf einem Verbindungselement angebracht und greift in eine Nockenschulter ein. Beim Zuklappen der Rückenlehne wird ein Sperrelement gegen ein Rückstellelement bewegt, wenn sich das Verbindungselement in einer ersten Position befindet. Der Nockenstift ist zudem so auf dem Verbindungselement angeordnet, dass die Bewegung der Nockenschulter freigegeben wird, wenn sich das Verbindungselement in einer zweiten Position befindet.

Die US 2006/0250013 A1 beschreibt eine Schwenkvorrichtung für einen Fahrzeugsitz mit einem Sitzrahmen, einem Sitzteil und einer schwenkbaren Rückenlehne. Die Schwenkvorrichtung weist eine Verriegelungsplatte auf, die zwischen einer Sperrposition und einer freigegebenen Position verschiebbar mit der Rückenlehne verbunden ist. Ein Anschlagbügel ist mit dem Sitzteil verbunden und weist ein erstes Ende auf, das zum Eingriff in die Verriegelungsplatte in der Sperrposition vorgesehen ist, wenn die Rückenlehne vollständig vorgeklappt ist. Der Anschlagbügel weist ferner ein zweites Ende auf, das für den Eingriff in die Verriegelungsplatte in der Sperrposition vorgesehen ist, wenn die Rückenlehne vollständig umgeklappt ist.

Aufgabe der vorliegenden Erfindung ist es, einen Fahrzeugsitz mit einem verbesserten Easy-Entry-System anzugeben. Diese Aufgabe wird erfindungsgemäß durch die im Anspruch 1 angegebenen Merkmale gelöst. Die Aufgabe wird erfindungsgemäß durch einen Fahrzeugsitz mit einem Beschlag mit einem integrierten Easy-Entry-System sowie gegebenenfalls einer erweiterten Komfortfunktion zur Positionierung der Sitzlehne über eine Easy-Entry-Position hinaus in eine Ladebodenposition gelöst, wobei das Easy-Entry-System zur Auslösung der Easy-Entry-Funktion mindestens einen Betätigungshebel aufweist, der über zumindest ein Zugelement mit einem Entriegelungshebel verbunden ist. Das Schiebeelement weist mindestens ein Aufnahmeelement mit einer außen zumindest teilweise umlaufenden Nut auf, in welche eine endseitige Schlaufe des Zugelements angeordnet ist. Dies stellt eine besonders einfache Aufhängung des Zugelements dar. Hierzu ist das Aufnahmeelement insbesondere als eine Scheibe oder ein Kreisring ausgebildet. Ferner ermöglicht eine solche Schlaufen-Scheiben-Verbindung einen einfachen Zusammenbau.

Der Erfindung liegt die Idee zugrunde, dass das Zugelement, z. B. ein Bowdenzug, beim Abklappen der Lehne nicht auf Spannung beansprucht wird. Hierzu findet das Zugelement im gezogenen Zustand einen unteren Rotationspunkt, der nahe des Lehnendrehpunkts oder der Schwenkachse der Sitzlehne ist. Wird die Sitzlehne abgeklappt, so findet keine Längenänderung zwischen Öse und oberem Einhänge- oder Anlenkungspunkt statt.

Ein Spannen oder das Ausbilden einer Lose im üblichen Komfortbereich wird hierbei in Kauf genommen, da dieses vergleichsweise gering ist (ca. 20° einer Lehnenverstellung im Komfortbereich gegenüber 100° bei einer Lehnenverstellung in die Ladebodenposition). Der Beschlag des Fahrzeugsitzes besteht aus einem Beschlagoberteil, welches an der Sitzlehne angeordnet ist und einem an einem Unterbau befestigten Beschlagunterteil, wobei an zumindest einer Seite des Fahrzeugsitzes ein solcher Beschlag angeordnet sein kann. Dabei umfasst die Übertragungsanordnung zumindest ein unterbaufestes Grundelement und ein relativ zu diesem, insbesondere translatorisch bewegbares Schiebeelement, welches einen Mitnehmer aufweist, der in eine Ausnehmung des Entriegelungshebels eingreift. Nach der Erfindung wird eine translatorische Bewegung des Zugelements mittels einer Übertragungsanordnung in eine rotatorische Bewegung des Entriegelungshebels zur Öffnung des Beschlags transformiert. Die Erfindung ermöglicht einen verbesserten Verlauf und insbesondere eine verbesserte Aufhängung des Zugelements oder Zugorgans. Darüber hinaus wird der Zusammenbau des Easy-Entry-Systems erheblich verbessert und die Entriegelungsbewegung erleichtert. Die Übertragungsanordnung umfasst zumindest ein unterbaufestes Grundelement und ein relativ zu diesem, insbesondere translatorisch bewegbares Schiebeelement, welches einen insbesondere drehfesten Mitnehmer aufweist, der in den Entriegelungshebel, insbesondere in eine Ausnehmung des Entriegelungshebels, eingreift und diesen mitnimmt. Durch Ziehen am Zugelement wird das Schiebeelement und mit diesem der Mitnehmer insbesondere translatorisch bewegt, wodurch der am Entriegelungshebel eingreifende Mitnehmer diesen Entriegelungshebel zwangsläufig mitnimmt, so dass dieser aufschwenkt und der Beschlag geöffnet wird.

Eine weitere Ausführungsform sieht vor, dass das Schiebeelement mindestens eine Aussparung aufweist, in welche ein Lagerelement des Grundelements angeordnet ist, wobei das Lagerelement und die Aussparung eine Slot-Pin-Führung oder eine Kulissenführung bilden. Dabei ist das Lagerelement insbesondere als eine ein Übertragungselement, wie eine Übertragungsstange, im Wesentlichen umgebende Lagerbuchse ausgeführt. Darüber hinaus kann das Übertragungselement zwischen den Seitenteilen der Sitzlehne in einem lang gestreckten Rohr oder einem Hüllelement angeordnet sein.

Zur Unterstützung und Übertragung der Zugbewegung des Zugelements ist das Schiebeelement am Grundelement relativ zu diesem beweglich, insbesondere längsbeweglich, gehalten. In einer möglichen Ausführungsform weist das Schiebeelement mindestens einen abstehenden Stift auf, der in einen Schlitz des Grundelements eingreift, wobei der Stift und der Schlitz eine Schlitz-Stift-Führung oder Kulissenführung bilden. Alternativ kann das Schiebeelement mit einem Schlitz versehen sein, in welchen ein vom Grundelement abstehender Stift translatorisch, insbesondere längsbeweglich eingreift. Eine weitere Ausführungsform sieht zwei Schlitze am Grundelement und zwei zu diesen korrespondierende Stifte am Schiebeelement vor. Eine alternative Ausführungsform sieht vor, dass das Schiebeelement einen weiteren Drehpunkt aufweist, wobei das Schiebeelement beispielsweise statt in einer geraden Kulissenbahn in einer gekrümmten oder gebogenen Kulissenbahn (zum Beispiel ein gebogenes Langloch) im Grundelement geführt wird.

Gemäß einer weiteren Ausführungsform ist der Mitnehmer als ein vom Schiebeelement abstehender Mitnahmestift ausgebildet, der in eine Ausnehmung des Entriegelungshebels eingreift. Dabei ist der Entriegelungshebel relativ zum Schiebeelement drehbar an einem Übertragungselement form- und/oder kraftschlüssig und somit zu diesem drehfest gehalten. Beim Ziehen am Betätigungshebel und somit Schieben des Schiebeelements wird der Entriegelungshebel betätigt, insbesondere gedreht, wodurch das Übertragungselement sich dreht und der Beschlag geöffnet wird. Dabei ist das Übertragungselement in einer Lagerung des Grundelements drehbar gelagert.

Bei dem Übertragungselement handelt es sich insbesondere um eine Stange oder ein Rohr, welche bzw. welches die Beschlagkomponente mit einer gegebenenfalls weiteren vorhandenen Beschlagkomponente oder einem Drehlager verbindet, wobei das Übertragungselement um seine Längsachse drehbar ist, wie aus der DE 10 2004 008 599 B3 bekannt ist. Sind zwei Beschlagkomponenten vorgesehen, sind diese mit dem Übertragungselement gekoppelt, wobei diese Kopplung vorzugsweise aus einer formschlüssigen Verbindung zwischen einem jeweiligen Ende des Übertragungselementes und der jeweiligen Beschlagkomponente resultiert. Zudem kann eine Axialsicherung vorgesehen sein, die beispielsweise ein sogenannter Schnellbefestiger ist und bei der Montage und bei einem Transport des Rastbeschlages ein Verschieben der Beschlagteile in axialer Richtung verhindert, wobei ein Verdrehen der Beschlagoberteile relativ zu den Beschlagunterteilen möglich ist.

Zur form- und/oder kraftschlüssigen Kopplung des Entriegelungshebels mit dem Übertragungselement weist der Entriegelungshebel eine zur Außenkontur des Übertragungselements korrespondierende, insbesondere kreisförmige Innenkontur oder ein Innenprofil auf.

Die Erfindung betrifft darüber hinaus einen Fahrzeugsitz mit einem solchen integrierten Easy-Entry-System mit einfacher Zugaufhängung und -führung des Zugelements zur Entriegelung des Beschlags.

Ausführungsbeispiele der Erfindung werden im Folgenden anhand von Ausführungsbeispielen näher erläutert.

Dabei zeigen:
- Figur 1: schematisch in perspektivischer Darstellung einen Fahrzeugsitz mit einer Sitzlehne und einem Sitzkissen sowie mit einem Beschlag mit integriertem Easy-Entry-System und gegebenenfalls erweiterter Komfortfunktion, und
- Figuren 2 bis 16: schematisch in verschiedenen Ansichten verschiedene Komponenten des Beschlags.

Einander entsprechende Teile sind in allen Figuren mit den gleichen Bezugszeichen versehen.

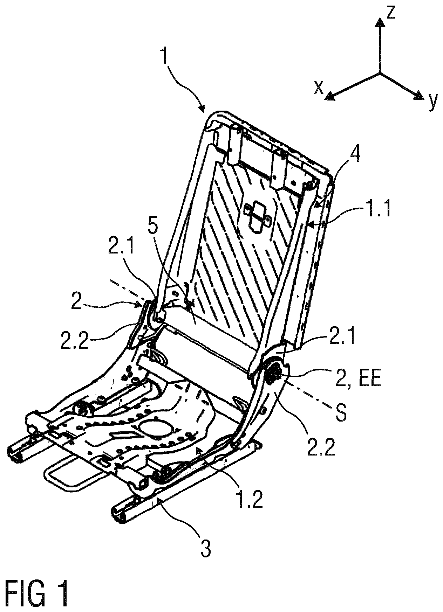

Die Figur 1 zeigt schematisch in perspektivischer Ansicht von vorne einen Fahrzeugsitz 1 mit einer Sitzlehne 1.1 und einem Sitzkissen 1.2 und zumindest einem Beschlag 2, wobei die Sitzlehne 1.1 mittels des Beschlags 2 drehbar am Sitzkissen 1.2 angeordnet ist. Im Ausführungsbeispiel nach Figur 1 weist der Fahrzeugsitz 1 zwei Beschläge 2 auf. Alternativ kann der Fahrzeugsitz 1 in nicht näher dargestellter Art und Weise einen Beschlag und ein gegenüberliegendes Drehlager aufweisen.

Die Anordnung des Fahrzeugsitzes 1 im Fahrzeug definiert dabei das nachfolgend verwendete Koordinatensystem umfassend eine Hochachse z, eine Längsachse x und eine Querachse y, wobei die Hochachse z parallel zur Fahrzeughochausrichtung, die Längsachse x parallel zur Fahrzeuglängsausrichtung und die Querachse y parallel zur Fahrzeugquerausrichtung ist.

Der Fahrzeugsitz 1 ist beispielsweise ein Vordersitz oder ein Fahrzeugsitz einer hinteren, beispielsweise einer zweiten Sitzreihe für ein Fahrzeug und ist auf einem Schienensystem 3 angeordnet, wodurch der Fahrzeugsitz 1 in Längsrichtung des Fahrzeuges verschiebbar ist.

Um einen Einstieg in einen Fondbereich oder eine hintere Sitzreihe des Fahrzeuges zu vereinfachen, weist der Fahrzeugsitz 1 eine mittels eines Easy-Entry-Systems EE des Beschlags 2 realisierbare Easy-Entry-Funktion auf.

Bei der Easy-Entry-Funktion handelt es sich um eine Einstiegshilfe, die einen vergrößerten und somit bequemeren Zugang zu dem Fondbereich, insbesondere eines zweitürigen Fahrzeuges oder in eine hintere Sitzreihe eines mehrtürigen Fahrzeuges, ermöglicht. Mittels des Easy-Entry-Systems EE wird der Fahrzeugsitz 1 auf dem Schienensystem 3 in Fahrtrichtung verschoben, um den Einstiegsbereich zu vergrößern, wobei gleichzeitig die Sitzlehne 1.1 des Fahrzeugsitzes 1 nach vorne geklappt wird. Dabei ist ein Schwenkbereich der Sitzlehne 1.1 bei ausgelöster Easy-Entry-Funktion begrenzt, z. B. bis zu 35° nach vorn in eine Easy-Entry-Position begrenzt.

Darüber hinaus kann die Sitzlehne 1.1 in eine weitere Komfortposition, insbesondere in eine Ladebodenposition, mittels einer erweiterten Komfortfunktion geschwenkt werden. In dieser Ladebodenposition oder Tischposition ist die Sitzlehne 1.1 im Wesentlichen parallel zum Sitzkissen 1.2 anordenbar.

Die Sitzlehne 1.1 ist um eine Schwenkachse S schwenkbar, die in Richtung Querausdehnung des Fahrzeuges verläuft. Das Schwenken der Sitzlehne 1.1 ist durch Betätigen eines Betätigungshebels 4 auslösbar. Der Betätigungshebel 4 ist nur an einer Seite des Fahrzeugsitzes 1 vorgesehen.

An jeder Seite des Fahrzeugsitzes 1 ist ein Beschlag 2 angeordnet, der aus einem Beschlagoberteil 2.1 und einem Beschlagunterteil 2.2 gebildet ist. Das Beschlagoberteil 2.1 ist lehnenfest an der Sitzlehne 1.1 befestigt und das Beschlagunterteil 2.2 ist unterbaufest beispielsweise am Fahrzeugboden befestigt. Der Beschlag 2 ist derart ausgebildet, dass eine Drehbewegung relativ zwischen dem Beschlagoberteil 2.1 und dem Beschlagunterteil 2.2 erfolgt.

Die an jeder Seite der Sitzlehne 1.1 angeordneten Beschläge 2 sind über ein Übertragungselement 5 in Form einer gekröpften Übertragungsstange oder eines Rohres miteinander gekoppelt, so dass eine Arretierung der Sitzlehne 1.1 beidseitig aufhebbar ist, um dieselbe schwenken zu können. Dabei ist jeweils ein Beschlag 2 an einem Ende des Übertragungselementes 5 formschlüssig befestigt.

Bei dem Übertragungselement 5 handelt es sich insbesondere um eine Stange oder ein Rohr, welche bzw. welches die Beschlagkomponente mit einer gegebenenfalls weiteren vorhandenen Beschlagkomponente verbindet, wobei das Übertragungselement 5 um seine Längsachse drehbar ist, wie aus der DE 10 2004 008 599 B3 bekannt ist.

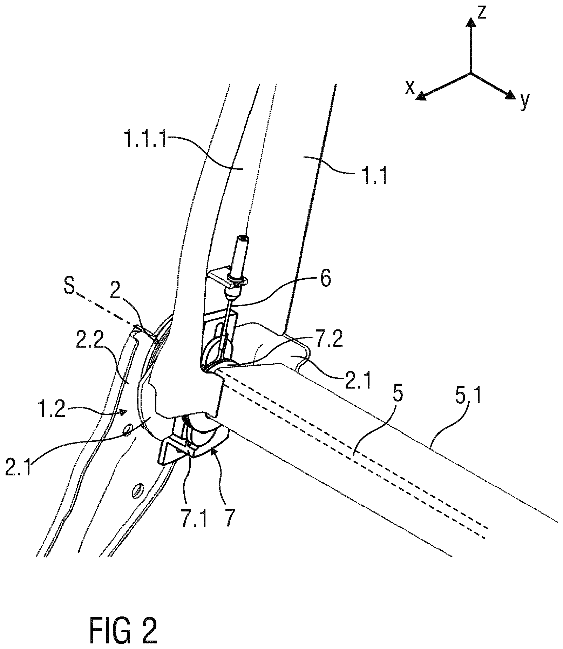

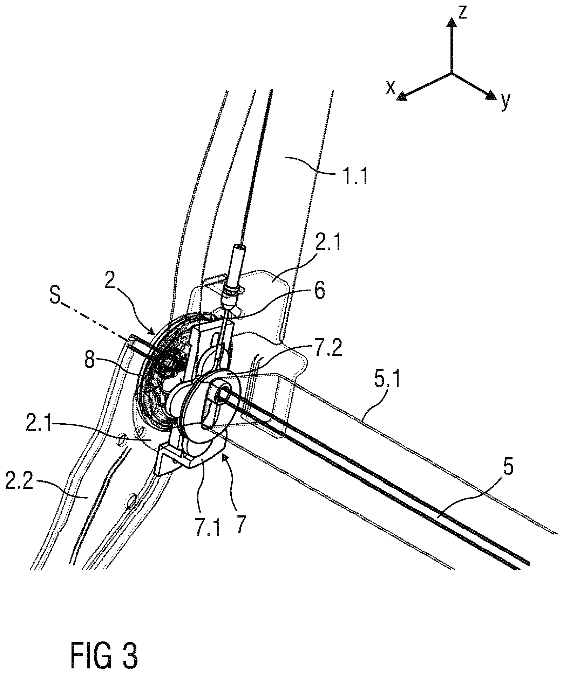

Das Easy-Entry-System EE ist in dem Beschlag 2 integriert und somit mit diesem als eine integrierte Baueinheit ausgeführt. Alternativ kann das Easy-Entry-System EE als ein integriertes Modul ausgebildet und, wie in Figuren 2 und 3 gezeigt, am Beschlag 2 angeordnet sein.

Figur 2 zeigt im Detail in vergrößerter perspektivischer Darstellung den Fahrzeugsitz 1 im Bereich des Beschlags 2.

Der Betätigungshebel 4 zur Auslösung der Easy-Entry-Funktion ist über ein Zugelement 6 mit einer Übertragungsanordnung 7 gekoppelt, die unterbaufest am Fahrzeugsitz 1, insbesondere am Beschlagunterteil 2.2 angeordnet ist.

Die Übertragungsanordnung 7 umfasst ein Grundelement 7.1 und ein Schiebeelement 7.2, an welchem das Zugelement 6 gelagert, insbesondere eingehängt ist. Das Zugelement 6 ist als ein Bowdenzug oder ein anderes geeignetes Übertragungsmittel zur Übertragung von Stellbewegungen ausgebildet.

Die Übertragungsanordnung 7 ist dabei, wie in Figur 2 beispielhaft gezeigt, innenseitig an einem Seitenteil 1.1.1 der Sitzlehne 1.1 und somit indirekt am innenseitigen Teil des Beschlagoberteils 2.1 in Richtung des Übertragungselements 5 angeordnet. Das Übertragungselement 5 ist von einem Hüllelement 5.1, insbesondere einem Rohr umgeben.

Das Seitenteil 1.1.1 der Sitzlehne 1.1 ist als ein U-Profil ausgebildet, wobei die Übertragungsanordnung 7 zwischen den Schenkeln des Seitenteils 1.1.1 angeordnet und somit hinreichend geschützt gehalten ist.

Figur 3 zeigt in perspektivischer Ansicht schräg von vorne den Fahrzeugsitz 1 im Bereich des Beschlags 2 halbtransparent, wobei die Komponenten zur Entriegelung des Beschlags 2, insbesondere der Übertragungsanordnung 7 und ein Entriegelungshebel 8 des Easy-Entry-Systems EE in Volllinien und die anderen Komponenten, wie Beschlagober- und unterteil 2.1, 2.2, das Seitenteil 1.1.1 der Sitzlehne 1.1, das Hüllelement 5.1, der Beschlag 2, das Zugelement 6, in Punktlinien dargestellt sind.

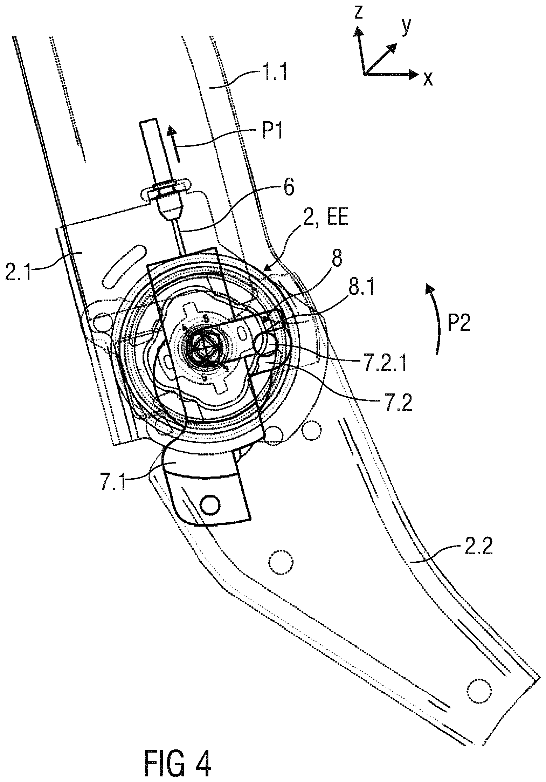

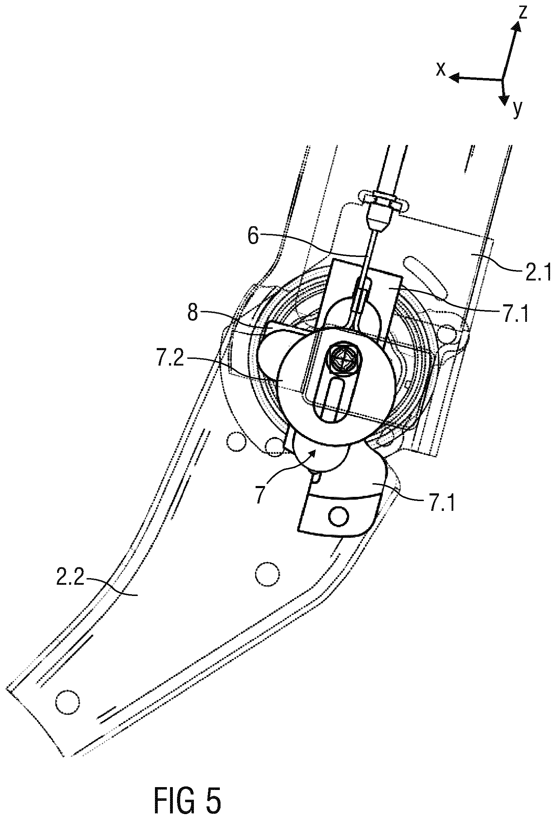

Figuren 4 und 5 zeigen den Beschlag 2 mit integriertem Easy-Entry-System EE und Übertragungsanordnung 7 halbtransparent in einer Seitenansicht von außen bzw. innen. Das Schiebeelement 7.2 umfasst einen Mitnehmer 7.2.1, der in eine Ausnehmung 8.1 des drehbar gelagerten Entriegelungshebels 8 des Easy-Entry-Systems EE eingreift.

Durch Betätigen des (Easy-Entry-)Betätigungshebels 4 und Ziehen des Zugelements 6 in Richtung eines ersten Pfeils P1 wird der Mitnehmer 7.2.1 um die Schwenkachse S entgegen dem Uhrzeigersinn in Richtung eines zweiten Pfeils P2 zur Entriegelung des Beschlags 2 und zur Auslösung einer Verstellfunktion und/oder der Easy-Entry-Funktion geschwenkt, wodurch der Beschlag 2 entriegelt wird und die Sitzlehne 1.1 im Uhrzeigersinn von einer Sitzposition über mindestens eine Zwischenposition in eine Easy-Entry-Position oder eine andere vordere Position, insbesondere eine Einstiegs- oder Ladeposition nach vorn geschwenkt und der Fahrzeugsitz 1 gegebenenfalls verschoben werden kann. Die Zwischenposition/en der Sitzlehne 1.1 kann/können dabei einen Komfortsitzbereich der Sitzlehne 1.1 darstellen, welche über eine im Beschlag 2 integrierte Sitzfunktion einstellbar ist/sind.

Mittels der Easy-Entry-Funktion des Beschlags 2 und bei entriegeltem (nicht verriegeltem) Beschlag 2 kann die Sitzlehne 1.1 gegebenenfalls im Uhrzeigersinn weiter nach vorne über die Easy-Entry-Position oder die andere vordere Position für eine erweiterte Komfortfunktion in eine Ladebodenposition schwenkbar sein.

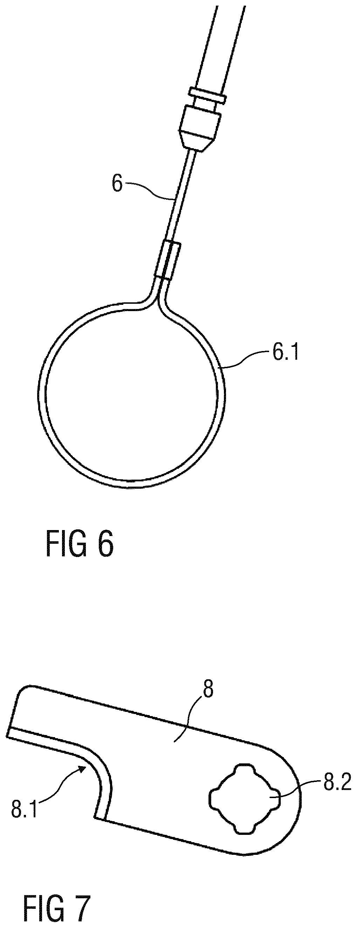

Figur 6 zeigt das als ein Bowdenzug ausgebildete Zugelement 6 im Detail. Dabei weist das Zugelement 6 im Bereich des Endes, welches drehpunktnah im Bereich der Schwenkachse S der Sitzlehne 1.1 am Schiebeelement 7.2 gelagert ist, zumindest eine Schlaufe 6.1 oder Wicklung auf. Alternativ kann das Ende des Zugelements 6 mit einem Ringelement versehen sein.

Figur 7 zeigt den Entriegelungshebel 8 im Detail. Zum Angreifen des Mitnehmers 7.2.1 am Entriegelungshebel 8 weist dieser eine Ausnehmung 8.1 auf. Darüber hinaus ist der Entriegelungshebel 8 mit dem Übertragungselement 5 über eine Aufnahme 8.2 form- und/oder kraftschlüssig gekoppelt. Hierzu weist die Aufnahme 8.2 eine zu der Außenkontur oder dem Außenprofil des Übertragungselements 5 oder des Hüllelements 5.1 korrespondierende Innenkontur bzw. ein Innenprofil auf.

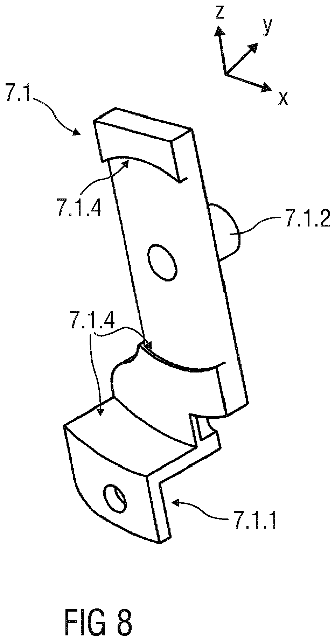

Figur 8 zeigt das als ein Träger ausgebildete Grundelement 7.1 der Übertragungsanordnung 7 in perspektivischer Draufsicht auf eine der Oberflächenseiten. Das Grundelement 7.1 weist ein unterbaufestes Ende 7.1.1 auf, welches derart ausgebildet ist, dass es am unteren Beschlagteil 2.2 befestigt werden kann. Darüber hinaus weist es eine Lagerung 7.1.2 zur drehbaren Anordnung des Übertragungselements 5 auf. Die Lagerung 7.1.2 ist in Art einer vom Grundelement 7.1 abstehenden Lagerbuchse ausgebildet.

Auf der der Lagerbuchse gegenüberliegenden Seite des Grundelements 7.1 weist diese Absätze 7.1.4 auf, in welche eine Komponente des Beschlags 2 und/oder ein Segment des Beschlagoberteils 2.1 aufgenommen werden kann.

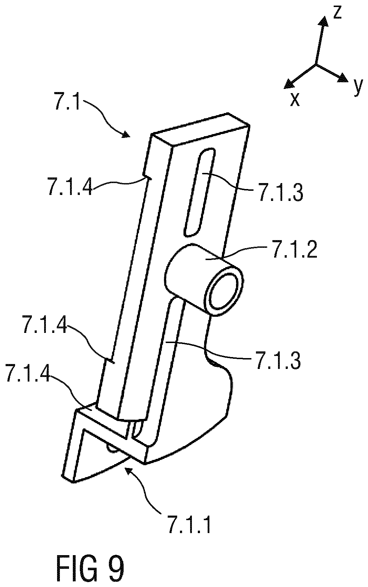

Figur 9 zeigt das als ein Träger ausgebildete Grundelement 7.1 der Übertragungsanordnung 7 in perspektivischer Draufsicht auf die andere Oberflächenseite. Das Grundelement 7.1 weist ferner mindestens eine Führung 7.1.3 zur translatorischen Führung des Schiebeelements 7.2 auf. Die Führung 7.1.3 ist dabei als eine in die Oberfläche des Grundelements 7.1 eingebrachte Nut, Aussparung oder Vertiefung ausgebildet. Alternativ kann die Führung 7.1.3 als ein Schlitz ausgebildet sein. Die Führung 7.1.3 erstreckt sich ober- und unterhalb der Lagerung 7.1.2. Alternativ kann sich die Führung 7.1.3 nur ober- oder nur unterhalb der Lagerung 7.1.2 erstrecken. Alternativ kann die Führung 7.1.3 in Art einer Kulissenführung leicht gebogen sein, z. B. als ein gebogenes Langloch ausgebildet sein.

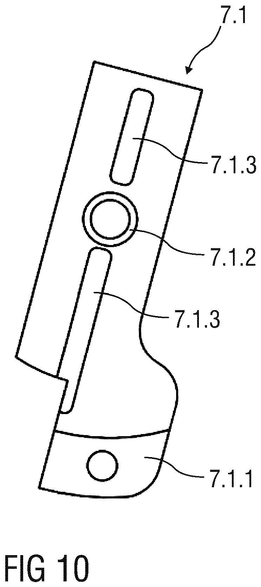

Figur 10 zeigt das Grundelement 7 in Draufsicht von innen mit den Führungen 7.1.3.

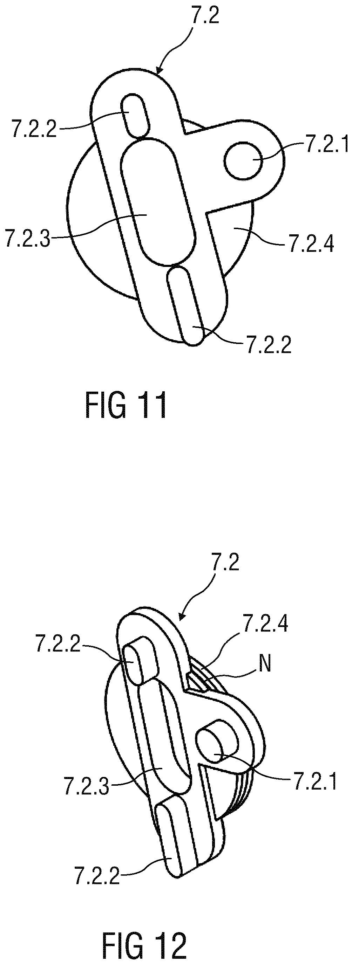

Figuren 11 und 12 zeigen das Schiebeelement 7.2 mit zu den Führungen 7.1.3 korrespondierenden Führungselementen 7.2.2. Die Führungselemente 7.2.2 sind als längliche Pins oder Stifte ausgebildet. Der Mitnehmer 7.2.1 ist als ein Stift oder Pin ausgebildet. Mittig weist das Schiebeelement 7.2 eine Schiebenut 7.2.3 auf, in welche die Lagerung 7.1.2 des Übertragungselements 5 eingreift, so dass das Schiebeelement 7.2 relativ zum Übertragungselement 5 translatorisch bewegt werden kann.

In den gezeigten Ausführungsbeispielen weist das Schiebeelement 7.2 stiftförmige Führungselemente 7.2.2 und das Grundelement 7.1 korrespondierende schlitzförmige Führungen 7.1.3 auf, welche zusammen eine Schlitz-Stift-Führung bilden. Dabei können diese auch umgekehrt angeordnet sein. Das heißt, das Schiebeelement 7.2 weist in nicht näher dargestellter Art und Weise mindestens einen Schlitz oder Slot auf und das Grundelement 7.1 weist mindestens einen korrespondierenden Stift oder Pin auf.

Zur Aufnahme des Zugelements 6, insbesondere dessen endseitige Schlaufe 6.1, weist das Schiebeelement 7.2 ein kreis- oder ringförmiges Aufnahmeelement 7.2.4 mit einer umlaufenden Nut N auf, wie in Figur 12 dargestellt.

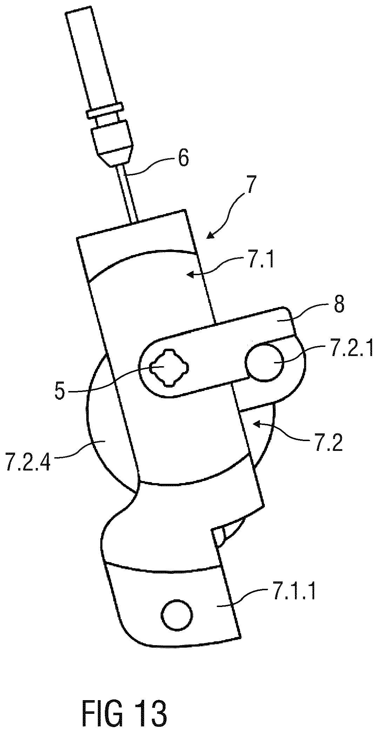

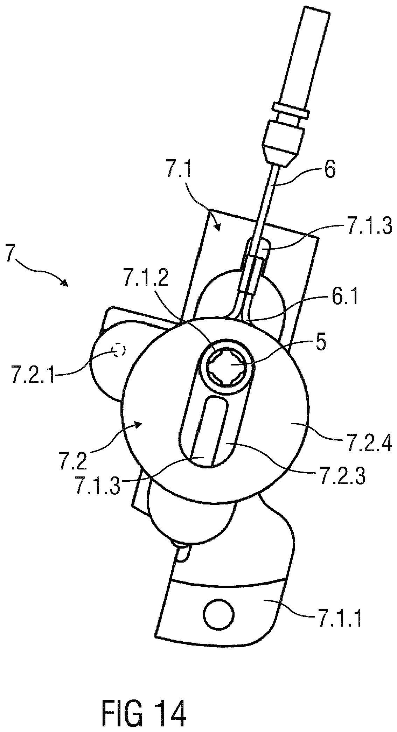

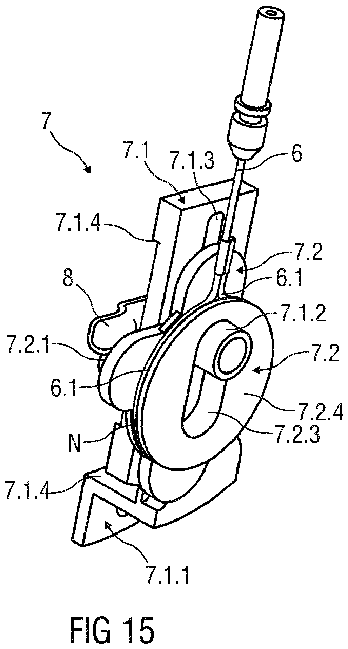

Figuren 13 bis 15 zeigen die Übertragungsanordnung 7 im zusammengebauten Zustand mit auf dieser angeordnetem Entriegelungshebel 8 des Easy-Entry-Systems EE von verschiedenen Seiten.

Im Betrieb des Beschlags 2 wird das Zugelement 6, der Bowdenzug, gezogen, wodurch das Schiebeelement 7.2 (auch Schieber genannt) innerhalb geeigneter Führungen 7.1.3, z. B. gerader oder gebogener Gleitbahnen, auf dem Grundelement 7.1, z. B. einer Grundplatte, nach oben geführt oder geschoben und somit zumindest translatorisch bewegt wird. Der Mitnehmer 7.2.1, insbesondere der Mitnehmerpin, drückt hierbei den Entriegelungshebel 8 nach oben oder schwenkt diesen, so dass die translatorische Bewegung des Schiebeelements 7.2 in eine rotatorische Bewegung des Entriegelungshebels 8 transformiert wird. Hierdurch wird die Übertragungsstange, d.h. das Übertragungselement 5 gedreht und damit der Beschlag 2 oder die Beschläge 2 geöffnet.

In seiner gezogenen Endlage ist hierbei der Mittelpunkt der Schlaufe 6.1 des Zugelements 6 (= Bowdenzugschlaufe) nahezu deckungsgleich mit dem Lehnendrehpunkt und der Schwenkachse S, wodurch bei einem Schwenken oder Abklappen der Sitzlehne 1.1 das Längenverhältnis des Zugelements 6 (= Bowdenzugseil) zu Schiebeelement 7.2 (= Schieber) nicht verändert wird und das Zugelement 6 nicht gespannt wird.

Das System ist auch dann noch funktionsfähig, wenn die Sitzlehne 1.1 über einen gewissen Komfort-Einstellbereich verfügt.

Die Erfindung findet insbesondere Anwendung für einen Fahrzeugsitz 1 mit einer Sitzlehne 1.1 mit mindestens einer vorderen - in der Regel nicht einsitzbaren Position, welche durch den in der Regel in der Nähe der Lehnenoberkante befindlichen Betätigungshebel 4 eingestellt werden kann. Vorteilhafterweise wird, wenn das Übertragungselement 5 beim Lehnenschwenken ortsfest stehen bleibt, damit ein zweiter, nicht dargestellter Entriegelungsgriff (zum Beispiel ein Komforthebel am Beschlag 2), der beispielsweise direkt an einem Ende des Übertragungselements 5 aufgesteckt wird, nicht mitgedreht, wenn die Sitzlehne 1.1 geschwenkt wird.

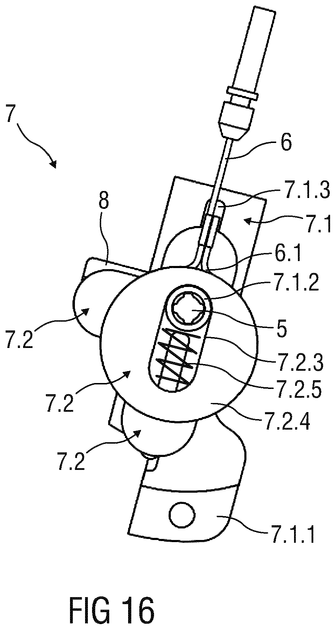

Figur 16 zeigt ein weiteres Ausführungsbeispiel der Erfindung. Das Schiebeelement 7.2 kann vorzugsweise federvorgespannt sein, so dass die Bowdenzug-Seele des Zugelements 6 unter Zugspannung steht. Hierzu weist das Schiebeelement 7.2 ein Federelement 7.2.5 auf, z. B. als Druckfeder in der Schiebenut 7.2.3 (auch Führungslangloch genannt).

Die Grundplatte oder das Grundelement 7.1 weist in diesem Ausführungsbeispiel eine hülsenartige Lagerung 7.1.2 als Führung für das Übertragungselement 5 auf.

Der Entriegelungshebel 8 ist auf der Lagerung 7.1.2 form-, kraft- und/oder stoffschlüssig befestigt. Beispielsweise ist der Entriegelungshebel 8 mit der Lagerung 7.1.2 des Übertragungselements 5 verschweißt. Es sind auch andere Ausführungsformen möglich. Beispielsweise kann der Entriegelungshebel 8 als Kunststoffteil ausgebildet sein und auf die Lagerung 7.1.2 form- und/oder kraftschlüssig befestigt, insbesondere aufgesteckt sein und einen rotatorischen Formschluss mit dem Übertragungselement 5 bilden. Dies ist insbesondere dann vorteilhaft, wenn ein Freilauf benötigt wird, um beispielsweise Toleranzen auszugleichen.

Die Schlaufe 6.1 am Ende des Zugelements 6 dient der Rotation beim Lehnenschwenken in der Nut N des Schiebeelements 7.2 und somit um das translatorisch bewegte, insbesondere gezogene Schiebeelement 7.2. Die Funktion der Schlaufe 6.1 kann alternativ durch ein nicht weiter dargestelltes Zusatzteil in Form eines Ringes ersetzt werden, welcher seinerseits dann eine Einhängemöglichkeit für das Zugelement 6 bietet.

### Bezugszeichenliste

- 1: Fahrzeugsitz
- 1.1: Sitzlehne
- 1.1.1: Seitenteil
- 1.2: Sitzkissen
- 2: Beschlag
- 2.1: Beschlagoberteil
- 2.2: Beschlagunterteil
- 3: Schienensystem
- 4: Betätigungshebel
- 5: Übertragungselement
- 5.1: Hüllelement
- 6: Zugelement
- 6.1: Schlaufe
- 7: Übertragungsanordnung
- 7.1: Grundelement
- 7.1.1: Ende
- 7.1.2: Lagerung
- 7.1.3: Führung
- 7.1.4: Absatz
- 7.2: Schiebeelement
- 7.2.1: Mitnehmer
- 7.2.2: Führungselemente
- 7.2.3: Schiebenut
- 7.2.4: Aufnahmeelement
- 7.2.5: Federelement
- 8: Entriegelungshebel
- 8.1: Ausnehmung
- 8.2: Aufnahme
- EE: Easy-Entry-System
- N: Nut
- P1: Erster Pfeil
- P2: Zweiter Pfeil
- S: Schwenkachse

- x: Längsachse
- y: Querachse
- z: Hochachse

## Patentansprüche

1. Fahrzeugsitz (1) mit einem Easy-Entry-System (EE), mit einer Sitzlehne (1.1) und einem Sitzkissen (1.2), in Anordnung mit einem Beschlag (2) umfassend ein an der Sitzlehne (1.1) angeordnetes Beschlagoberteil (2.1) sowie ein an einem Unterbau angeordnetes Beschlagunterteil (2.2), wobei der Beschlag (2) zur Neigungsverstellung der Sitzlehne (1.1) relativ zum Sitzkissen (1.2) zumindest in einem Komfortbereich und gegebenenfalls mit einer erweiterten Komfortfunktion zur Positionierung der Sitzlehne (1.1) über eine Easy-Entry-Position oder eine vordere Position hinaus in eine Ladebodenposition vorgesehen ist, umfassend zur Auslösung einer Easy-Entry-Funktion mindestens einen Betätigungshebel (4), der über zumindest ein Zugelement (6) mit einem Entriegelungshebel (8) zur Entriegelung der Neigungsverstellung der Sitzlehne (1.1) gekoppelt ist, **dadurch gekennzeichnet, dass** das Zugelement (6) im Bereich einer Schwenkachse (S) der Sitzlehne (1.1) angelenkt ist, wobei eine translatorische Bewegung des Zugelements (6) mittels einer Übertragungsanordnung (7) in eine rotatorische Bewegung des Entriegelungshebels (8) zur Öffnung des Beschlags (2) transformiert wird, wobei die Übertragungsanordnung (7) zumindest ein unterbaufestes Grundelement (7.1) und ein relativ dazu translatorisch bewegbares Schiebeelement (7.2) umfasst, welches einen Mitnehmer (7.2.1) aufweist, der in den Entriegelungshebel (8) eingreift und diesen mitnimmt und wobei das Schiebeelement (7.2) mindestens ein Aufnahmeelement (7.2.4) mit einer außen zumindest teilweise umlaufenden Nut (N) aufweist, in welcher eine endseitige Schlaufe (6.1) des Zugelements (6) so angeordnet ist, dass der Mittelpunkt der Schlaufe (6.1) in der gezogenen Endlage des Zugelements (6) nahezu deckungsgleich mit der Schwenkachse (S) ist.

2. Fahrzeugsitz (1) mit einem Easy-Entry-System nach einem der vorhergehenden Ansprüche, **dadurch gekennzeichnet, dass** das Schiebeelement (7.2) mindestens eine Schiebenut (7.2.3) aufweist, in welche eine Lagerung (7.1.2) des Grundelements (7.1) angeordnet ist, wobei die Lagerung (7.1.2) und die Schiebenut (7.2.3) eine Slot-Pin-Führung bilden.

3. Fahrzeugsitz (1) mit einem Easy-Entry-System nach einem der vorhergehenden Ansprüche, **dadurch gekennzeichnet, dass** das Schiebeelement (7.2) mindestens ein Führungselement (7.2.2) aufweist, das in einer Führung (7.1.3) des Grundelements (7.1) eingreift, oder umgekehrt, wobei das Führungselement (7.2.2) und die Führung (7.1.3) eine Schlitz-Stift-Führung bilden.

4. Fahrzeugsitz (1) mit einem Easy-Entry-System nach einem der vorhergehenden Ansprüche, **dadurch gekennzeichnet, dass** der Mitnehmer (7.2.1) als ein vom Schiebeelement (7.1) abstehender Mitnahmestift ausgebildet ist, der in eine Ausnehmung (8.1) des Entriegelungshebels (8) eingreift.

5. Fahrzeugsitz (1) mit einem (EE) nach einem der vorhergehenden Ansprüche, **dadurch gekennzeichnet, dass** der Entriegelungshebel (8) form- und/oder kraftschlüssig an einem Übertragungselement (5) gehalten ist.

6. Fahrzeugsitz (1) mit einem Easy-Entry-System (EE) nach Anspruch 5, **dadurch gekennzeichnet, dass** das Übertragungselement (5) in einer Lagerung (7.1.2) des Grundelements (7.1) drehbar gelagert ist.

## Claims

1. Vehicle seat (1) with an easy-entry system (EE), having a backrest (1.1) and having a seat cushion (1.2), in an arrangement with a fitting (2) comprising a fitting upper part (2.1), which is arranged on the backrest (1.1), and a fitting lower part (2.2), which is arranged on a substructure, wherein the fitting (2) is provided for an inclination adjustment of the backrest (1.1) relative to the seat cushion (1.2) at least in a comfort range and possibly with an enhanced comfort function for positioning of the backrest (1.1) beyond an easy-entry position or beyond a forward position into a loading floor position, comprising, for triggering an easy-entry function, at least one actuation lever (4) which is coupled via at least one tension element (6) to an unlocking lever (8) for unlocking of the inclination adjustment of the backrest (1.1), **characterized in that** the tension element (6) is articulatedly connected in the region of a pivot axis (S) of the backrest (1.1) wherein a translational movement of the tension element (6) is transformed by way of a transmission arrangement (7) into a rotational movement of the unlocking lever (8) for the opening of the fitting (2), wherein the transmission arrangement (7) comprises at least one main element (7.1), which is fixed relative to a substructure, and a slide element (7.2), which is movable relative to said main element in translational fashion and which has a driver (7.2.1) which engages into and drives the unlocking lever (8) and wherein the slide element (7.2) has at least one receiving element (7.2.4) with an externally at least partially encircling groove (N) in which an end-side loop (6.1) of the tension element (6) is arranged such that the central point of the loop (6.1), in the pulled end position of the tension element (6), is situated approximately congruently with the pivot axis (S).

2. Vehicle seat (1) with an easy-entry system according to one of the preceding claims, **characterized in that** the slide element (7.2) has at least one slide groove (7.2.3) into which a bearing means (7.1.2) of the main element (7.1) is arranged, wherein the bearing means (7.1.2) and the slide groove (7.2.3) form a slot-pin guide.

3. Vehicle seat (1) with an easy-entry system according to either of the preceding claims, **characterized in that** the slide element (7.2) has at least one guide element (7.2.2) which engages into a guide (7.1.3) of the main element (7.1), or vice versa, wherein the guide element (7.2.2) and the guide (7.1.3) form a channel-peg guide.

4. Vehicle seat (1) with an easy-entry system according to one of the preceding claims, **characterized in that** the driver (7.2.1) is in the form of a driving pin which projects from the slide element (7.1) and which engages into a recess (8.1) of the unlocking lever (8).

5. Vehicle seat (1) with an easy-entry system (EE) according to one of the preceding claims, **characterized in that** the unlocking lever (8) is held in form-fit and/or force-fit fashion on a transmission element (5).

6. Vehicle seat (1) with an easy-entry system (EE) according to Claim 5,
**characterized in that** the transmission element (5) is mounted rotatably in a bearing means (7.1.2) of the main element (7.1).

## Revendications

1. Siège de véhicule (1) doté d'un système d'accès facile (EE), avec un accoudoir de siège (1.1) et un coussin de siège (1.2), en agencement avec une ferrure (2) comprenant une partie supérieure de ferrure (2.1) disposée au niveau de l'accoudoir de siège (1.1) ainsi qu'une partie inférieure de ferrure (2.2) disposée au niveau d'un bâti, la ferrure (2) étant prévue pour le réglage de l'inclinaison de l'accoudoir de siège (1.1) par rapport au coussin de siège (1.2) au moins dans une zone de confort et le cas échéant avec une fonction de confort élargie pour le positionnement de l'accoudoir de siège (1.1) en partant d'une position d'accès facile ou d'une position avant pour passer dans une position de plancher de charge, comprenant pour le déclenchement d'une fonction d'accès facile au moins un levier d'actionnement (4) couplé via au moins un élément de traction (6) à un levier de déverrouillage (8) pour le déverrouillage du réglage d'inclinaison de l'accoudoir de siège (1.1), **caractérisé en ce que** l'élément de traction (6) est articulé dans la région d'un axe de pivotement (S) de l'accoudoir de siège (1.1), un mouvement translationnel de l'élément de traction (6) étant transformé au moyen d'un agencement de transmission (7) en un mouvement rotatif du levier de déverrouillage (8) pour l'ouverture de la ferrure (2), l'agencement de transmission (7) comprenant au moins un élément de base (7.1) fixé au bâti et un élément de poussée (7.2) pouvant effectuer un mouvement de translation par rapport à lui et comportant un doigt d'entraînement (7.2.1) s'engrenant dans le levier de déverrouillage (8) et l'accrochant et l'élément de poussée (7.2) comportant au moins un élément de logement (7.2.4) avec une rainure (N) extérieure au moins en partie périphérique dans laquelle une boucle (6.1) de côté d'extrémité de l'élément de traction (6) est disposée de telle sorte que le point central de la boucle (6.1) soit dans la position d'extrémité tirée de l'élément de traction (6) coïncidant presque avec l'axe de pivotement (S).

2. Siège de véhicule (1) doté d'un système d'accès facile selon l'une quelconque des revendications précédentes, **caractérisé en ce que** l'élément de poussée (7.2) comporte au moins une rainure de poussée (7.2.3) dans laquelle est disposé un palier (7.1.2) de l'élément de base (7.1), le palier (7.1.2) et la rainure de poussée (7.2.3) formant un guide fente-broche.

3. Siège de véhicule (1) doté d'un système d'accès facile selon l'une quelconque des revendications précédentes, **caractérisé en ce que** l'élément de poussée (7.2) comporte au moins un élément de guidage (7.2.2) s'engrenant dans un guide (7.1.3) de l'élément de base (7.1) ou inversement, l'élément de guidage (7.2.2) et le guide (7.1.3) formant un guide fente-pointeau.

4. Siège de véhicule (1) doté d'un système d'accès facile selon l'une quelconque des revendications précédentes, **caractérisé en ce que** le doigt d'entraînement (7.2.1) est réalisé sous la forme d'un pointeau d'entraînement ressortant de l'élément de poussée (7.1) et s'emboîtant dans un évidement (8.1) du levier de déverrouillage (8).

5. Siège de véhicule (1) doté d'un système (EE) selon l'une quelconque des revendications précédentes, **caractérisé en ce que** le levier de déverrouillage (8) est maintenu par complémentarité de formes et/ou de forces contre un élément de transmission (5).

6. Siège de véhicule (1) doté d'un système d'accès facile (EE) selon la revendication 5, **caractérisé en ce que** l'élément de transmission (5) est disposé de façon à pouvoir pivoter dans un palier (7.1.2) de l'élément de base (7.1) .
